# DEMANDE DE BREVET EUROPEEN

(11) **EP 4 794 247 A1**
(43) Date de publication de la demande: **19.08.2026**
(21) Numéro de dépôt: 25205466.3
(22) Date de dépôt: 29.09.2025
(51) Int. Cl.: H04L 9/00, H04L 9/32

(54) **PROCÉDÉ DE TRAITEMENT CRYPTOGRAPHIQUE PAR ORDINATEUR UTILISANT UNE FONCTION DANS UN DOMAINE MASQUÉ PRENANT TROIS VALEURS EN ENTRÉE DANS UN DOMAINE MASQUÉ**

(30) Priorité: 13.02.2025 FR 2501495
(71) Demandeur: IDEMIA France, 92400 Courbevoie (FR)
(72) Inventeur: LESCUYER DE CHAPTAL-LAMURE, Roch Olivier, 92400 COURBEVOIE (FR)
(74) Mandataire: Idemia

(57) **Abrégé**

Procédé de traitement cryptographique mis en œuvre par ordinateur, comprenant l'application d'une fonction dans un domaine masqué à une première donnée d'entrée, une deuxième donnée d'entrée et une troisième donnée d'entrée, l'application comprenant : calculer (100) une première donnée intermédiaire par application d'un premier opérateur ⊕*^{m}* entre la première donnée d'entrée et un premier opérande ; calculer (102) une deuxième donnée intermédiaire par application du premier opérateur entre la deuxième donnée d'entrée et la troisième donnée d'entrée ; calculer (104) une troisième donnée intermédiaire par application d'un deuxième opérateur ∧^{*m*,*sec*} entre la première donnée intermédiaire et la deuxième donnée intermédiaire, le deuxième opérateur comprenant des mesures de protection contre des attaques par canal auxiliaire ; et calculer (106) une donnée de sortie de la fonction non linéaire dans le domaine masqué par application du premier opérateur entre au moins un deuxième opérande et la troisième donnée intermédiaire.

## Description

### DOMAINE DE L'INVENTION

La présente invention concerne un procédé de traitement cryptographique mis en œuvre par ordinateur, et utilisant une fonction dans un domaine masqué prenant trois valeurs en entrée dans un domaine masqué.

### ETAT DE LA TECHNIQUE

L'opérateur de disjonction exclusive ⊕ (également appelé XOR) et l'opérateur de conjonction logique Λ (également appelé AND) sont des opérateurs bien connus à deux opérandes.

La fonction de majorité (MAJ) et la fonction de choix (CH) sont deux fonctions non linéaires à trois valeurs d'entrée, utilisées dans certains traitements cryptographiques.

Lorsque les trois valeurs d'entrées sont des bits, la fonction de majorité MAJ retourne 1 lorsqu'au moins deux des trois valeurs d'entrée valent 1, et retourne 0 lorsqu'au moins deux des trois valeurs d'entrée valent 0. Lorsque les valeurs d'entrées sont codées sur plusieurs bits, chaque bit des entrées est traité indépendamment. La fonction majorité est ainsi appliquée à chaque position de bit séparément.

La fonction de choix CH est une fonction prenant en entrée A, B, C. Lorsque A, B, C sont des bits, la fonction de choix CH retourne B si A vaut 1 et retourne C si A vaut 0. La valeur d'entrée A agit ainsi comme un sélecteur entre B et C. Lorsque A, B, C sont codés sur plusieurs bits, le choix est réalisé bit à bit.

Il a par ailleurs été proposé de transposer les opérateurs et fonctions qui précèdent dans un domaine masqué.

Il existe ainsi des opérateurs ⊕*^{m}*, Λ*^{m}* qui vérifient les égalités suivantes pour toute paire de valeurs X, Y: $X ⊕ Y = = unmask \left(mask\left(X\right){⊕}^{m}mask\left(Y\right)\right)$ $X ∧ Y = = unmask \left(mask\left(X\right){∧}^{m}mask\left(Y\right)\right)$

L'opérateur Λ*^{m}* constituant une transposition de la conjonction logique dans le domaine chiffré peut s'implémenter de différentes façons.

Il existe aussi des opérateurs *MAJ^{m}* et *CH^{m},* qui vérifient les égalités suivantes pour tout triplet de valeurs A, B, C : $MAJ \left(A, B, C\right) = = unmask \left({MAJ}^{m}\left(mask\left(A\right),mask\left(B\right),mask\left(C\right)\right)\right)$ $CH \left(A, B, C\right) = = unmask \left({CH}^{m}\left(mask\left(A\right),mask\left(B\right),mask\left(C\right)\right)\right)$

Les opérateurs *MAJ^{m}* et *CH^{m}* peuvent s'implémenter de différentes façons à l'aide des opérateurs ⊕*^{m}*, Λ*^{m}*.

Certaines implémentations de l'opérateur Λ*^{m}* sont vulnérables à des attaques par canal auxiliaire (« side channel attack » en anglais). D'autres implémentations de l'opérateur Λ*^{m}* incluent des mesures de protection contre de telles attaques par canal auxiliaire, mais sont, en contrepartie, plus coûteuses en ressources matérielles.

Une implémentation naïve de la fonction *MAJ^{m}* constituant une transposition de la fonction de majorité MAJ dans le domaine chiffrée est la suivante : ${MAJ}^{m} \left({A}^{m}, {B}^{m}, {C}^{m}\right) = \left({A}^{m}{∧}^{m}{B}^{m}\right) {⊕}^{m} \left({A}^{m}{∧}^{m}{C}^{m}\right) {⊕}^{m} \left({B}^{m}∧{C}^{m}\right)$ où *A^{m}, B^{m}, C^{m}* désignent des données constituant des représentations masquées de valeurs A, B, C respectives.

L'implémentation naïve susmentionnée de la fonction *MAJ^{m}* requiert trois fois l'opérateur Λ*^{m}* constituant une transposition de la conjonction logique dans le domaine masqué, et deux fois l'opérateur ⊕*^{m}* constituant une transposition de la disjonction exclusive dans le domaine masqué. Ceci est relativement coûteux en ressources, et ce d'autant plus lorsque l'opérateur Λ*^{m}* est implémenté de sorte à inclure des mesures de protection contre des attaques par canal auxiliaire.

Une deuxième implémentation de la fonction *MAJ^{m},* plus optimisée que l'implémentation naïve, est la suivante : ${MAJ}^{m} \left({A}^{m}, {B}^{m}, {C}^{m}\right) = \left({A}^{m}{∧}^{m}{B}^{m}\right) {⊕}^{m} \left(\left({A}^{m}{⊕}^{m}{C}^{m}\right){∧}^{m}{C}^{m}\right)$

Cette deuxième implémentation fait l'économie d'un opérateur Λ*^{m}* par rapport à l'implémentation naïve. Cependant, une exécution sécurisée contre des attaques par canal auxiliaire, de cette implémentation, reste relativement coûteuse en ressources matérielles.

Par ailleurs, une implémentation naïve de la fonction *CH^{m}* est la suivante : ${CH}^{m} \left({A}^{m}, {B}^{m}, {C}^{m}\right) = \left({A}^{m}{∧}^{m}{B}^{m}\right) {⊕}^{m} \left({¬}^{m}{A}^{m}{∧}^{m}{C}^{m}\right)$ où ¬*^{m}* est un opérateur constituant une transposition dans le domaine masqué de l'opérateur « non logique » ¬ comme suit : $¬ X = = unmask \left({¬}^{m}\left(mask\left(X\right)\right)\right)$

Cette implémentation naïve requiert deux fois l'opérateur Λ*^{m}* constituant une transposition de la conjonction logique dans le domaine masqué, une fois l'opérateur ⊕*^{m}* constituant une transposition de la disjonction exclusive dans le domaine masqué, et une fois l'opérateur non logique dans le domaine masqué. Là encore, ceci est relativement coûteux en ressources, et ce d'autant plus lorsque l'implémentation de la conjonction logique est sécurisée contre des attaques par canal auxiliaire.

### EXPOSE DE L'INVENTION

Un problème technique à résoudre est de rendre un traitement cryptographique utilisant une fonction prenant trois valeurs en entrée plus résistant à des attaques par canal auxiliaire.

Ce problème technique est résolu par un procédé de traitement cryptographique mis en œuvre par ordinateur, comprenant l'application d'une fonction dans un domaine masqué à une première donnée d'entrée, une deuxième donnée d'entrée et une troisième donnée d'entrée, l'application de la fonction dans le domaine masqué comprenant :
- calculer une première donnée intermédiaire par application d'un premier opérateur ⊕*^{m}* entre la première donnée d'entrée et un premier opérande, le premier opérateur vérifiant l'égalité suivante pour toute paire de valeurs X, Y : $X ⊕ Y = = unmask \left(mask\left(X\right){⊕}^{m}mask\left(Y\right)\right)$
   ∘ où ⊕ est une disjonction exclusive, *mask* est une fonction de masquage, et *unmask* est une fonction de démasquage,
- calculer une deuxième donnée intermédiaire par application du premier opérateur entre la deuxième donnée d'entrée et la troisième donnée d'entrée,
- calculer une troisième donnée intermédiaire par application d'un deuxième opérateur *Λ^{m,sec}* entre la première donnée intermédiaire et la deuxième donnée intermédiaire, le deuxième opérateur comprenant des mesures de protection contre des attaques par canal auxiliaire, et vérifiant l'égalité suivante pour toute paire de valeurs X, Y : $X ∧ Y = = unmask \left(mask\left(X\right){∧}^{m , sec}mask\left(Y\right)\right)$
   ∘ où Λ est une conjonction logique,
- calculer une donnée de sortie de la fonction dans le domaine masqué par application du premier opérateur entre au moins un deuxième opérande et la troisième donnée intermédiaire.

Dans le procédé proposé, le deuxième opérateur constitue une transposition sécurisée de la conjonction logique dans le domaine masqué. Ce deuxième opérateur n'est toutefois pas appliqué directement aux valeurs d'entrée, comme c'est le cas dans les implémentations détaillées dans l'introduction ; ce deuxième opérateur est plutôt appliqué à la première valeur intermédiaire et à la deuxième valeur intermédiaire, distinctes des trois valeurs d'entrée car résultant chacune de l'application du premier opérateur qui constitue une transposition de la disjonction exclusive dans le domaine masqué. C'est pourquoi le procédé proposé est plus résistant à des attaques par canal auxiliaire que les implémentations mentionnées dans l'introduction, du fait que la surface d'attaque sur la conjonction logique ne permet pas de cibler directement les valeurs d'entrées de la fonction.

Le procédé de traitement cryptographique peut en outre comprendre les caractéristiques optionnelles suivantes prises seules ou en combinaison à chaque fois que cela est possible.

De préférence, la fonction de masquage *mask* est configurée pour masquer une valeur X quelconque en une représentation *X^{m}* dans le domaine masqué, *X^{m}* est constituée de n+1 portions avec n≥1, dans lequel :
- lorsque n=1, les portions sont respectivement égales à M et X⊕M, où M est un masque,
- lorsque n>1, l'une des portions est égale à *X* ⊕ *M*₁ ⊕ ... ⊕ *Mₙ,* et les n autres portions sont respectivement égales à *M*₁,...,*Mₙ,* où pour tout i allant de 1 à n, *Mᵢ* est un masque.

Dans un mode de réalisation, la fonction dans le domaine masqué est une fonction *MAJ^{m}* vérifiant l'égalité suivante pour tout triplet de valeurs A, B, C : $MAJ \left(A, B, C\right) = = unmask \left({MAJ}^{m}\left(mask\left(A\right),mask\left(B\right),mask\left(C\right)\right)\right)$ où MAJ est une fonction de majorité.

De préférence, le premier opérande est la troisième donnée d'entrée, et le deuxième opérande est la troisième donnée d'entrée.

Dans un autre mode de réalisation, la fonction le domaine masqué est une fonction *CH^{m}* vérifiant l'égalité suivante pour tout triplet de valeurs A, B, C : $CH \left(A, B, C\right) = = unmask \left({CH}^{m}\left(mask\left(A\right),mask\left(B\right),mask\left(C\right)\right)\right)$ où CH est une fonction de choix.

De préférence, le premier opérande est un aléa, le deuxième opérande est une quatrième donnée intermédiaire calculée par application d'un troisième opérateur Λ*^{m}* entre l'aléa et la deuxième donnée intermédiaire, le troisième opérateur vérifiant l'égalité suivante pour toute paire de valeurs X, Y *: X* Λ *Y* == *unmask*(*mask*(*X*) Λ*^{m} mask*(*Y*)), et le premier opérateur est en outre appliqué à la troisième donnée d'entrée pour le calcul de la donnée de sortie de la fonction dans le domaine masqué.

De préférence, le troisième opérateur est dépourvu de mesures de protection contre des attaques par canal auxiliaire.

De préférence le troisième opérateur Λ*^{m}* est configuré pour produire un résultat à n+1 portions [*Z*₁, ..., *Z*_{*n*+1}] à partir de deux opérandes [*X*₁, ..., *X*_{*n*+1}] et [*Y*₁, ... , *Y*_{*n*+1}] à n+1 portions, avec *n* ≥ 1, de sorte que, pour tout i allant de 1 à n+1 : ${Z}_{i} = \left({X}_{1}⊕…⊕{X}_{n + 1}\right) ∧ {Y}_{i}$

De préférence, le procédé comprend :
- masquer des données en clair en des données masquées à l'aide de la fonction de masquage *mask,*
- générer un résultat masqué à partir des données masquées, dans lequel : la première donnée d'entrée, la deuxième donnée d'entrée et la troisième donnée d'entrée sont issues des données masquées, et le résultat masqué est issu de la donnée de sortie de la fonction dans le domaine masqué,
- démasquer le résultat masqué à l'aide de la fonction de démasquage *unmask.*

De préférence, le traitement cryptographique est une fonction de hachage.

Selon une autre préférence, les données en clair comprennent un message et une clé, et le résultat masqué est une représentation masquée d'un code d'authentification de message de hachage à clé.

Constitue un autre objet de la présente divulgation un produit programme d'ordinateur comprenant des instructions de code de programme pour l'exécution des étapes du procédé de traitement cryptographique exposé ci-dessus, lorsque ce programme est exécuté par ordinateur.

Constitue encore un autre objet un dispositif de traitement cryptographique comprenant un circuit configuré pour appliquer une fonction dans un domaine masqué à une première valeur d'entrée, une deuxième valeur d'entrée et une troisième valeur d'entrée, l'application de la fonction dans le domaine masqué comprenant :
- calculer une première donnée intermédiaire par application d'un premier opérateur ⊕*^{m}* entre la première donnée d'entrée et un premier opérande, le premier opérateur vérifiant l'égalité suivante pour toute paire de valeurs X, Y : $X ⊕ Y = = unmask \left(mask\left(X\right){⊕}^{m}mask\left(Y\right)\right)$
   ∘ où ⊕ est une disjonction exclusive, *mask* est une fonction de masquage, et *unmask* est une fonction de démasquage,
- calculer une deuxième donnée intermédiaire par application du premier opérateur entre la deuxième donnée d'entrée et la troisième donnée d'entrée,
- calculer une troisième donnée intermédiaire par application d'un deuxième opérateur Λ*^{m,sec}* entre la première donnée intermédiaire et la deuxième donnée intermédiaire, le deuxième opérateur comprenant des mesures de protection contre des attaques par canal auxiliaire, et vérifiant l'égalité suivante pour toute paire de valeurs X, Y : $X ∧ Y = = unmask \left(mask\left(X\right){∧}^{m , sec}mask\left(Y\right)\right)$
   ∘ où Λ est une conjonction logique,
- calculer une donnée de sortie de la fonction dans le domaine masqué par application du premier opérateur entre au moins un deuxième opérande et la troisième donnée intermédiaire.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est un organigramme d'étapes d'un procédé appliquant une fonction dans un domaine masqué selon un premier mode de réalisation.
La figure 2 est un organigramme d'étapes d'un procédé appliquant une fonction dans un domaine masqué selon un deuxième mode de réalisation.
La figure 3 représente schématiquement un procédé de traitement cryptographique selon un mode de réalisation.
La figure 4 représente schématiquement un dispositif de traitement cryptographique selon un premier mode de réalisation.
La figure 5 représente schématiquement un dispositif de traitement cryptographique selon un deuxième mode de réalisation.

Sur l'ensemble des figures, les éléments similaires portent des références identiques.

### DESCRIPTION DETAILLEE DE L'INVENTION

### 1) Opérateurs de base

### 1.1) Opérateurs binaires

Par convention, dans le présent texte, la notation *Z = X* ⊕ *Y* désigne le calcul d'une valeur de sortie Z codée sur k bits par application d'une disjonction exclusive entre deux opérandes X et Y également codés sur k bits, avec k≥1. La disjonction exclusive est réalisée bit à bit, de sorte à respecter la table de vérité ci-dessous pour tout i allant de 1 à k :

| i-ème bit de l'opérande X | i-ème bit de l'opérande Y | i-ème bit de *Z = X* ⊕ *Y* |
|---|---|---|
| 0 | 0 | 0 |
| 0 | 1 | 1 |
| 1 | 0 | 1 |
| 1 | 1 | 0 |

Par convention, dans le présent texte, la notation *Z* = *X* Λ *Y* désigne le calcul d'une valeur de sortie Z codée sur k bits par application d'une conjonction logique entre deux opérandes X et Y également codés sur k bits, avec k≥1, par exemple 32 bits. La conjonction logique est réalisée bit à bit, de sorte à respecter la table de vérité ci-dessous pour tout i allant de 1 à k :

| i-ème bit de l'opérande X | i-ème bit de l'opérande Y | ième bit de *Z = X* Λ *Y* |
|---|---|---|
| 0 | 0 | 0 |
| 0 | 1 | 0 |
| 1 | 0 | 0 |
| 1 | 1 | 1 |

Les opérateurs ⊕ et Λ sont des opérateurs de base, peu coûteux en ressources matérielles, mais sensibles à des attaques par canal auxiliaire.

### 1.2) Fonction de majorité

Une fonction de majorité *MAJ* est une fonction non linéaire prenant en entrée trois valeurs d'entrée A, B, C et produisant une donnée de sortie notée *MAJ* (*A, B, C*).

Les valeurs d'entrée A, B, C sont chacune codées sur k bits, avec k≥1, par exemple 32 bits.

La fonction de majorité *MAJ* respecte la table de vérité suivante, pour tout i allant de 1 à k :

| i-ème bit de A | i-ème bit de B | i-ème bit de C | ième bit de *MAJ* (*A, B, C)* |
|---|---|---|---|
| 0 | 0 | 0 | 0 |
| 0 | 0 | 1 | 0 |
| 0 | 1 | 0 | 0 |
| 0 | 1 | 1 | 1 |
| 1 | 0 | 0 | 0 |
| 1 | 0 | 1 | 1 |
| 1 | 1 | 0 | 1 |
| 1 | 1 | 1 | 1 |

### 1.3) Fonction de choix

Une fonction de choix *CH* est une fonction non linéaire prenant en entrée trois valeurs d'entrée A, B, C et produisant une donnée de sortie notée *CH*(*A, B, C*). La première valeur d'entrée A agit comme sélecteur entre la deuxième valeur d'entrée B et la troisième valeur d'entrée C. Chaque bit de la valeur de sortie *CH*(*A, B, C*) ne peut donc qu'être égal à un bit de même rang de B ou C.

La fonction de choix *CH* respecte la table de vérité suivante, pour tout i allant de 1 à k :

| i-ème bit de A | i-ème bit de B | i-ème bit de C | ième bit de *CH*(*A, B, C)* |
|---|---|---|---|
| 0 | 0 | 0 | 0 |
| 0 | 0 | 1 | 1 |
| 0 | 1 | 0 | 0 |
| 0 | 1 | 1 | 1 |
| 1 | 0 | 0 | 0 |
| 1 | 0 | 1 | 0 |
| 1 | 1 | 0 | 1 |
| 1 | 1 | 1 | 1 |

Les valeurs d'entrées A, B, C sont chacune codées sont k bits, avec k≥1, par exemple 32 bits.

### 2) Masquage / démasquage

Considérons une donnée en clair X codée sur k bits, avec k≥1.

Cette donnée X peut être masquée à l'aide d'une fonction de masquage *mask,* comme suit : ${X}^{m} = mask \left(X\right)$

Le terme *X^{m}* désigne ici une représentation masquée de X. Autrement dit, *X^{m}* représente X dans le domaine masqué généré par la fonction de masquage *mask.* Dans le présent texte, le suffixe « m » est par convention utilisé pour désigner des données ou des opérateurs dans le domaine masqué.

La représentation masquée *X^{m}* de la donnée X est constituée de n+1 portions (« shares » en anglais), ou n est un entier supérieur ou égal à 1. Conventionnellement, n est appelé « l'ordre » du masquage réalisé. On a donc : ${X}^{m} = \left[{X}_{1},…,{X}_{n + 1}\right]$

Par exemple, chacune des n+1 portions est également codée sur k bits. Dans ce cas, la représentation masquée *X^{m}* est codée sur k(n+1) bits. Dans un mode de réalisation particulier dans lequel k=32 et n=1, alors la représentation masquée *X^{m}* est codée sur 64 bits.

Réciproquement, une donnée *X^{m}* dans le domaine masqué est la représentation d'une donnée en clair X, pouvant être récupérée à l'aide d'une fonction de démasquage *unmask,* comme suit : $X = unmask \left({X}^{m}\right)$

La fonction de démasquage *unmask* est ainsi complémentaire à la fonction de masquage *mask.*

Dans un mode de réalisation, la fonction de masquage *mask* fait intervenir la disjonction exclusive, comme suit.

A l'ordre 1, on a : ${X}^{m} = \left[{X}_{1}, {X}_{2}\right] = \left[M,X⊕M\right]$ où M est un masque.

A des ordres supérieurs (n>1), on a : ${X}^{m} = \left[{X}_{1},…,{X}_{n + 1}\right] = \left[{M}_{1},…,{M}_{n},X⊕{M}_{1}⊕…⊕{M}_{n}\right]$

Les donnée *M*₁ *à Mₙ* sont n masques pouvant par exemple avoir été tirés aléatoirement ou pseudo-aléatoirement.

L'ordre des n+1 portions dans la représentation masqué *X^{m}* est indifférent. Dans l'exemple ci-dessus, la portion générée par application de n opérateurs ⊕ est la dernière portion, mais ce n'est pas obligatoire. Autrement dit, il faut comprendre que le masquage ci-dessus est généralisable à toute représentation masquée *X^{m}* comprenant n+1 portions constituées de n masques et d'une portion supplémentaire générée par disjonctions exclusives entre les n masques et la donnée à masquer X.

La fonction de démasquage *unmask* fait alors également intervenir la disjonction exclusive, comme suit : $X = {X}_{1} ⊕ … ⊕ {X}_{n + 1}$

### 3) Opérateurs dans le domaine masqué

Il existe par ailleurs des opérateurs dans un domaine masqué généré par la fonction *mask.* Ces opérateurs traitent des opérandes constituant des représentations masquées de données en clair, et produisent une donnée de sortie constituant également une représentation masquée d'une donnée en clair.

### 3.1) Transposition d'opérateurs binaires dans le domaine masqué

Certains de ces opérateurs traitent deux opérandes constituant des représentations masquées *X^{m}, Y^{m}* de données en clair X, Y, et produisent une donnée de sortie *Z^{m}* constituant une représentation masquée d'une donnée en clair Z. La représentation masquée *Z^{m}* contient n+1 portions au même titre que les représentations masquées *X^{m}, Y^{m}*, c'est-à-dire que l'on a : ${X}^{m} = \left[{X}_{1},…,{X}_{n + 1}\right]$ ${Y}^{m} = \left[{Y}_{1},…,{Y}_{n + 1}\right]$ ${Z}^{m} = \left[{Z}_{1},…,{Z}_{n + 1}\right]$

Il existe en particulier un opérateur ⊕*^{m}* constituant une transposition de la disjonction exclusive dans le domaine masqué. Cet opérateur ⊕*^{m}* permet de respecter la même table de vérité que l'opérateur de disjonction exclusive de base ⊕, lorsqu'il est utilisé en combinaison avec la fonction de masquage *mask* et la fonction de démasquage *unmask* correspondante.

Plus précisément, si on suppose que *Z = X* ⊕ *Y,* alors l'opérateur de disjonction exclusive dans le domaine masqué ⊕*^{m}* est tel que : ${X}^{m} = mask \left(X\right)$ ${Y}^{m} = mask \left(Y\right)$ ${Z}^{m} = {X}^{m} {⊕}^{m} {Y}^{m}$ $Z = unmask \left({Z}^{m}\right)$

Autrement dit, l'opérateur de disjonction exclusive dans le domaine masqué ⊕*^{m}* est tel que, pour toute paire de données X, Y : $X ⊕ Y = = unmask \left(mask\left(X\right){⊕}^{m}mask\left(Y\right)\right)$

Une implémentation de l'opérateur ⊕*^{m}* est par exemple la suivante : $\left[{X}_{1},…,{X}_{n + 1}\right] {⊕}^{m} \left[{Y}_{1},…,{Y}_{n + 1}\right] = \left[{X}_{1}⊕{Y}_{1},…,{X}_{n + 1}⊕{Y}_{n + 1}\right]$

Autrement dit, on a, pour tout i allant de 1 à n+1 : ${Z}_{i} = {X}_{i} ⊕ {Y}_{i}$

Cette implémentation de l'opérateur ⊕*ₘ* coûte n+1 disjonctions exclusives de base ⊕ à l'ordre n.

Il existe par ailleurs un opérateur de conjonction logique dans le domaine masqué que l'on note Λ*^{m}*. Cet opérateur Λ*^{m}* permet de respecter la même table de vérité que l'opérateur de conjonction logique de base A, lorsqu'il est utilisé en combinaison avec la fonction de masquage *mask* et la fonction de démasquage *unmask* correspondante.

Autrement dit, l'opérateur de conjonction logique dans le domaine masqué Λ*^{m}* est tel que, pour toute paire de données X, Y : $X ∧ Y = = unmask \left(mask\left(X\right){∧}^{m}mask\left(Y\right)\right)$

Une implémentation possible de l'opérateur Λ*^{m}* est la suivante : $\begin{matrix}\left[{X}_{1}, … {X}_{n + 1}\right] {∧}_{m} \left[{Y}_{1}, … ,{Y}_{n + 1}\right] = \left[{Z}_{1}, … ,{Z}_{n + 1}\right] \\ = \left[\left({X}_{1}⊕…⊕{X}_{n + 1}\right)∧{Y}_{1},…,\left({X}_{1}⊕…⊕{X}_{n + 1}\right)∧{Y}_{n + 1}\right]\end{matrix}$

Autrement dit, dans cette implémentation, on a pour tout i allant de 1 à n+1 : ${Z}_{i} = \left({X}_{1}⊕…⊕{X}_{n + 1}\right) ∧ {Y}_{i}$

L'opérateur de conjonction logique dans le domaine masqué Λ*^{m}* est toutefois dépourvu de mesures de protection contre des attaques par canal auxiliaire. On constate notamment dans l'implémentation présentée ci-dessus qu'il « démasque » l'entrée *X^{m}* ; il n'apporte donc pas de sécurisation satisfaisante à de telles attaques du point de vue de *X^{m}.*

Pour surmonter ce problème, il existe un autre opérateur de conjonction logique dans le domaine masqué, que l'on note par convention *Λ^{m,sec},* comprenant des mesures de protection contre des attaques par canal auxiliaire. Ces mesures de protection vont au-delà du simple fait que cet opérateur manipule des représentations masquées de données en clair.

Tout comme l'opérateur Λ*^{m}*, cet opérateur sécurisé Λ*^{m,sec}* permet de respecter la même table de vérité que l'opérateur de conjonction logique de base A, lorsqu'il est utilisé en combinaison avec la fonction de masquage *mask* et la fonction de démasquage *unmask* correspondante. Autrement dit, l'opérateur Λ*^{m,sec}* est tel que, pour toute paire de données X, Y : $X ∧ Y = = unmask \left(mask\left(X\right){∧}^{m , sec}mask\left(Y\right)\right)$

Une implémentation possible de cet opérateur *Λ^{m,sec}* a été proposée dans le document « Private Circuits: Securing Hardware against Probing Attacks », par Yuval Ishai, Amit Sahai, David A. Wagner, CRYPTO 2003. Cette implémentation connue de l'homme du métier utilise les opérateurs de base ⊕ et Λ en combinaison, et utilise en outre de la génération d'aléa.

D'autres implémentations possibles de cet opérateur Λ*^{m,sec}* sont également connues de l'homme du métier. Par exemple, la section 5.3 du document « Differential power Analysis of HMAC Based on SHA-2, and Countermeasures », par Robert McEvoy, Michael Tunstall, Colin C. Murphy, and William P. Marnane, et la section 3 du document « Private Circuits : Securing Hardware against Probing Attacks », par Yuval Ishai, Amit Sahai, et David Wagner, exposent deux autres possibilités d'implémentation de l'opérateur Λ*^{m,sec}.*

### 3.2) Transposition de la fonction de majorité dans le domaine masqué

Soient *A^{m}*, *B^{m}, C^{m}* trois représentations masquées de trois données en clair A, B, C. On a donc : ${A}^{m} = \left[{A}_{1}, … ,{A}_{n + 1}\right]$ ${B}^{m} = \left[{B}_{1}, … ,{B}_{n + 1}\right]$ ${C}^{m} = \left[{C}_{1}, … ,{C}_{n + 1}\right]$

On note *MAJ^{m}* une fonction constituant une transposition de la fonction de majorité *MAJ* dans le domaine masqué, prenant en entrée les valeurs *A^{m}*, *B^{m}, C^{m}* et produisant une donnée de sortie notée *MAJ^{m}*(*A^{m}, B^{m}, C^{m}*). Cette donnée de sortie est elle-même une représentation masquée d'une donnée en clair.

La fonction *MAJ^{m}* permet de respecter la même table de vérité que la fonction de majorité *MAJ* lorsqu'elle est utilisée en combinaison avec la fonction de masquage *mask* et la fonction de démasquage *unmask* correspondante.

Plus précisément, la fonction *MAJ^{m}* est telle que, pour tout triplet de données A, B, C : $MAJ \left(A, B, C\right) = = unmask \left({MAJ}^{m}\left(mask\left(A\right),mask\left(B\right),mask\left(C\right)\right)\right)$

La fonction *MAJ^{m}* est implémentée de sorte à réaliser les calculs suivants : ${MAJ}^{m} \left({A}^{m}, {B}^{m}, {C}^{m}\right) = {C}^{m} {⊕}^{m} \left(\left({A}^{m}{⊕}^{m}{C}^{m}\right){∧}^{m , sec}\left({B}^{m}⊕{C}^{m}\right)\right)$

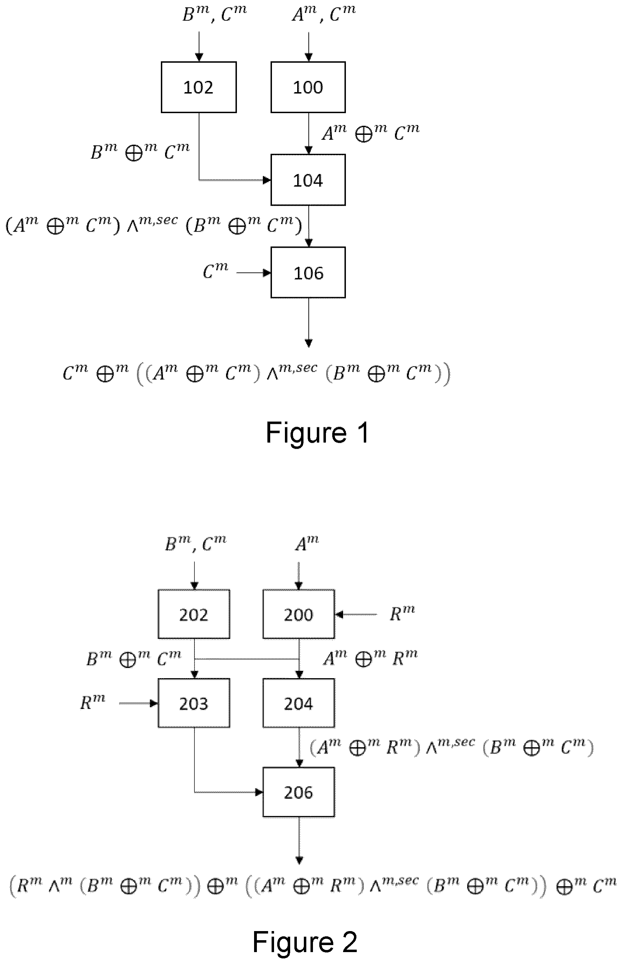

Ainsi, un ordinateur faisant appel à la fonction *MAJ^{m}* réalise les étapes exposées ci-dessous et représentées sur la figure 1.

Dans une étape 100, l'ordinateur calcule une première donnée intermédiaire *A^{m}* ⊕*^{m} C^{m}* par application de l'opérateur ⊕*^{m}* entre deux opérandes : la première donnée d'entrée *A^{m}* et la troisième donnée d'entrée *C^{m}*.

Dans une étape 102, l'ordinateur calcule une deuxième donnée intermédiaire *B^{m}* ⊕*^{m} C^{m}* par application de l'opérateur ⊕*^{m}* entre la deuxième donnée d'entrée B^{m} et la troisième donnée d'entrée C^{m}.

Les deux étapes qui précèdent 100, 102 peuvent être réalisées dans n'importe quel ordre ou en parallèle par l'ordinateur.

Dans une étape 104, l'ordinateur calcule une troisième donnée intermédiaire (*A^{m}* ⊕*^{m} C^{m}*) Λ*^{m,sec}* (*B^{m}* ⊕*^{m}* C*^{m}*) par application de l'opérateur sécurisé Λ*^{m,sec}* entre la première donnée intermédiaire *A^{m}* ⊕*^{m} C^{m}* et la deuxième donnée intermédiaire *B^{m}* ⊕*^{m} C^{m}*.

Dans une étape 106, l'ordinateur calcule enfin la donnée de sortie de la fonction *MAJ^{m}* par application de l'opérateur ⊕*^{m}* entre deux opérandes : la troisième donnée d'entrée *C^{m},* et la troisième donnée intermédiaire (*A^{m}* ⊕*^{m}* C*^{m}*) Λ*^{m,sec}* (*B^{m}* ⊕ *C^{m}*). Dans cette étape 106, *C^{m}* constitue un opérande qui est obtenu sans utiliser l'opérateur sécurisé Λ*^{m,sec} ;* il s'agit en effet de l'une des données d'entrée de la fonction de majorité dans le domaine masqué *MAJ^{m},* directement disponible.

Cette implémentation de la fonction *MAJ^{m}* offre une protection efficace contre des attaques par canal auxiliaire tout en requérant des ressources matérielles réduites par rapport aux implémentation décrites en introduction. En particulier, le surcroît de ressources matérielles requis par l'utilisation l'opérateur sécurisé Λ*^{m,sec}* est compensé par le fait que cet opérateur sécurisé n'est utilisé qu'une seule fois, alors que des implémentations décrites dans l'introduction utilisent plusieurs conjonctions logiques sécurisées.

La fonction *MAJ^{m}* étant symétrique, les valeurs d'entrée *A^{m}*, *B^{m}* et *C^{m}* peuvent être interverties. Dans le présent texte, désigner *A^{m}*, *B^{m}* et *C^{m}* comme « première », « deuxième » et « troisième donnée » d'entrée n'implique pas d'ordre particulier.

### 3.3) Transposition de la fonction de choix dans le domaine masqué

Soient *A^{m}*, *B^{m}, C^{m}* trois représentations masquées de trois données en clair A, B, C. On a donc : ${A}^{m} = \left[{A}_{1},…,{A}_{n + 1}\right]$ ${B}^{m} = \left[{B}_{1},…,{B}_{n + 1}\right]$ ${C}^{m} = \left[{C}_{1},…,{C}_{n + 1}\right]$

On note *CH^{m}* une fonction constituant une transposition de la fonction de choix *CH* dans le domaine masqué, prenant en entrée les valeurs *A^{m}, B^{m}, C^{m}* et produisant une donnée de sortie notée *CH^{m}*(*A^{m}, B^{m}, C^{m}*). Cette donnée de sortie est elle-même une représentation masquée d'une donnée en clair.

La fonction *CH^{m}* permet de respecter la même table de vérité que la fonction de majorité *CH* lorsqu'elle est utilisée en combinaison avec la fonction de masquage *mask* et la fonction de démasquage *unmask* correspondante.

Plus précisément, la fonction *CH^{m}* est telle que, pour tout triplet de données A, B, C : $CH \left(A, B, C\right) = = unmask \left({CH}^{m}\left(mask\left(A\right),mask\left(B\right),mask\left(C\right)\right)\right)$

La fonction *CH^{m}* est implémentée de sorte à réaliser les calculs suivants : ${CH}^{m} \left({A}^{m}, {B}^{m}, {C}^{m}\right) = \left({R}^{m}{∧}^{m}\left({B}^{m}{⊕}^{m}{C}^{m}\right)\right) {⊕}^{m} \left(\left({A}^{m}{⊕}^{m}{R}^{m}\right){∧}^{m , sec}\left({B}^{m}{⊕}^{m}{C}^{m}\right)\right) {⊕}^{m} {C}^{m}$

Ainsi, un ordinateur faisant appel à la fonction de choix dans le domaine masqué *CH^{m}* réalise les étapes ci-dessous et représentées sur la figure 2.

Dans une étape 200, l'ordinateur calcule une première donnée intermédiaire *A^{m}* ⊕*^{m} R^{m}* par application de l'opérateur ⊕*^{m}* entre deux opérandes : la première donnée d'entrée *A^{m}* et un aléa *R^{m}*, généré aléatoirement ou pseudo-aléatoirement par l'ordinateur. Cet aléa peut être renouvelé à chaque nouvel appel à la fonction de choix *CH^{m}.*

L'aléa *R^{m}* est de la forme suivante : ${R}^{m} = \left[{R}_{1},…,{R}_{n + 1}\right]$

Pour construire l'aléa *R^{m}*, l'ordinateur tire aléatoirement au moins une des portions *Rᵢ*. Dans une mode de réalisation, l'ordinateur procède ainsi n+1 fois, pour toutes les portions.

Dans un autre mode de réalisation, l'ordinateur ne fait qu'un tirage d'une valeur R, assigne la valeur R à l'une des portions et met à zéro toutes les autres portions.

Dans une étape 202, l'ordinateur calcule par ailleurs une deuxième donnée intermédiaire *B^{m}* ⊕*^{m} C^{m}* par application de l'opérateur ⊕*^{m}* entre la deuxième donnée d'entrée *B^{m}* et la troisième donnée d'entrée *C^{m}*.

Les deux étapes qui précèdent 200, 202 peuvent être réalisées dans n'importe quel ordre ou en parallèle par l'ordinateur.

Dans une étape 204, l'ordinateur calcule une troisième donnée intermédiaire (*A^{m}* ⊕*^{m} R^{m}*) Λ*^{m,sec}* (*B^{m}* ⊕*^{m} C^{m}*) par application de l'opérateur sécurisé Λ*^{m,sec}* entre la première donnée intermédiaire *A^{m}* ⊕*^{m} R^{m}* et la deuxième donnée intermédiaire *B^{m}* ⊕*^{m} C^{m}*.

Dans une étape 203, l'ordinateur calcule une quatrième donnée intermédiaire *R^{m}* Λ*^{m}* (*B^{m}* ⊕*^{m} C^{m}*) par application de l'opérateur Λ*^{m}* (non sécurisé) entre l'aléa *R^{m}* et la deuxième donnée intermédiaire *B^{m}* ⊕*^{m} C^{m}*.

Cette étape 203 peut être réalisée avant, en parallèle de ou après l'étape de calcul 200 de la première donnée intermédiaire *A^{m}* ⊕*^{m} R^{m}.* Par ailleurs, cette étape 203 peut être réalisée avant, en parallèle de ou après l'étape de calcul 204.

Dans une étape 206, l'ordinateur calcule la donnée de sortie de la fonction *CH^{m}* par application de l'opérateur ⊕*^{m}* entre trois opérandes : la quatrième donnée intermédiaire *R^{m}* Λ*^{m}* (*B^{m}* ⊕*^{m} C^{m}*), la troisième donnée intermédiaire (*A^{m}* ⊕*^{m} R^{m}*) Λ*^{m,sec}* (*B^{m}* ⊕*^{m} C^{m}*), et la troisième donnée d'entrée *C^{m}*. Dans l'étape 206, la quatrième donnée intermédiaire *R^{m}* Λ*^{m}* (*B^{m}* ⊕*^{m} C^{m}*) constitue un opérande qui est obtenu sans utiliser l'opérateur sécurisé Λ*^{m,sec}.* En effet, seuls les opérateurs ⊕*^{m}* et Λ*^{m}* (non sécurisés) ont été utilisés pour calculer cet opérande.

Ce mode de réalisation de la fonction *CH^{m}* constituant une transposition de la fonction de choix dans le domaine masqué offre une protection efficace contre des attaques par canal auxiliaire tout en requérant des ressources matérielles réduites par rapport aux implémentation décrites en introduction. En particulier, le surcroît de ressources matérielles requis par l'utilisation de l'opérateur Λ*^{m,sec}* sécurisé est compensé par le fait que cet opérateur sécurisé n'est utilisé qu'une seule fois, alors que l'implémentation dans l'introduction utilisent plusieurs conjonctions logiques sécurisées.

Dans un autre mode de réalisation, la fonction *CH^{m}* est implémentée comme suit : $\begin{matrix}{CH}^{m} \left({A}^{m}, {B}^{m}, {C}^{m}\right) \\ = \left({R}^{m}{∧}^{m , sec}\left({B}^{m}{⊕}^{m}{C}^{m}\right)\right) {⊕}^{m} \left(\left({A}^{m}{⊕}^{m}{R}^{m}\right){∧}^{m , sec}\left({B}^{m}{⊕}^{m}{C}^{m}\right)\right) {⊕}^{m} {C}^{m}\end{matrix}$

Cet autre mode de réalisation diffère du précédent mode de réalisation seulement en ce que l'opérateur constituant une transposition de la conjonction logique qui est utilisé à l'étape 203 est l'opérateur sécurisé Λ*^{m,sec}.* Ce mode de réalisation est plus coûteux en ressources matérielles, mais reste mieux protégé contre des attaques par canal auxiliaire que les implémentations discutées en introduction.

### 4) Procédé de traitement cryptographique exploitant la fonction de choix et/ou de la fonction de majorité dans le domaine masqué

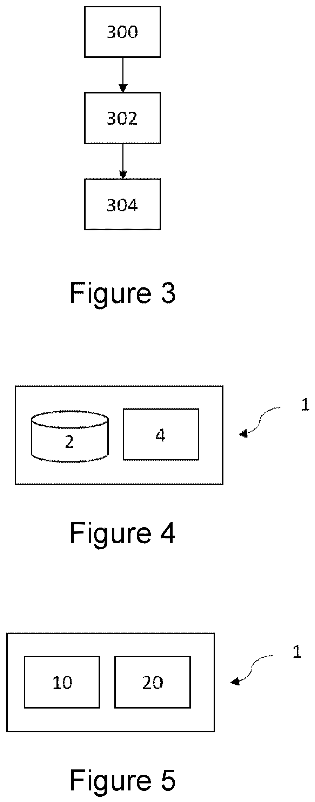

En référence à la figure 3, un procédé de traitement cryptographique mis en œuvre par un ordinateur comprend les étapes suivantes.

Dans une étape 300, l'ordinateur masque des données en clair en des données masquées, à l'aide de la fonction de masquage *mask.* Au cours de cette étape, la fonction de masquage *mask* peut être utilisée une ou plusieurs fois pour différentes données en clair.

Dans une étape 302, l'ordinateur applique un traitement qui génère un résultat masqué à partir des données masquées. Ce traitement utilise au moins une fois la fonction *MAJ^{m}* et/ou au moins une fois la fonction *CH^{m},* en les appliquant à des triplets de données intermédiaires issues des données masquées. Le résultat masqué est issu du ou des résultats retournés par ces fonctions.

Ensuite, l'ordinateur démasque le résultat masqué de sorte à récupérer le résultat, en utilisant la fonction de démasquage *unmask.*

Par exemple, le traitement cryptographique est une fonction de hachage *h,* cette fonction de hachage comprenant une séquence d'opérations, la séquence d'opérations comprenant au moins un appel à la fonction *MAJ^{m}* et/ou au moins un appel à la fonction *CH^{m}.*

La fonction de hachage *h* est par exemple l'une des suivantes : SHA-1, SHA-224, SHA-256, SHA-384, SHA-512, SHA-512/224 ou SHA-512/256. Toutes ces fonctions sont documentées en section 4 dans le document « Secure Hash Standard (SHS) » portant la référence FIPS PUB 180-4, et disponible ici : https://nvlpubs.nist.gov/nistpubs/FIPS/NIST.FIPS.180-4.pdf

Dans une application particulière de ce procédé, les données en clair comprennent un message noté *text,* une clé notée *key,* et deux constantes notées *ipad* et *opad.* Leur masquage est réalisé comme suit : ${text}^{m} = mask \left(text\right)$ ${key}_{1}^{m} = mask \left(key⊕ipad\right)$ ${key}_{2}^{m} = mask \left(key⊕opad\right)$

Ici, *text^{m}* est un texte masqué, ${key}_{1}^{m}$ est une première clé masquée, et ${key}_{2}^{m}$ est une deuxième clé masquée.

Par ailleurs le traitement qui est réalisé à l'étape 302 sur la base des données masquées *text^{m},* ${key}_{1}^{m}$ et ${key}_{2}^{m}$ est un traitement qui génère un code d'authentification de message de hachage à clé (en anglais HMAC ou « keyed-hash message authentication code ») dans le domaine masqué. Ce traitement peut alors être le suivant : $h \left({key}_{2}^{m},h\left({key}_{1}^{m}, {text}^{m}\right)\right)$

On constate ici que la fonction *h* est une fonction de hachage de Merkle-Damgård, à deux entrées, qui est appelée deux fois de suite. Le résultat retourné par le deuxième appel à la fonction *h* est une représentation masquée du code d'authentification. Plus de détails sont fournis sur un tel traitement dans le document « HMAC: Keyed-Hashing for Message Authentication », qui est disponible ici : https://datatracker.ietf.org/doc/html/rfc2104.

A l'étape 304, la représentation masquée du code d'authentification est passé en entrée de la fonction *unmask,* de sorte à récupérer le code d'authentification.

### 5) Dispositif de traitement cryptographique

L'ordinateur utilisé pour la mise en œuvre du procédé de traitement cryptographique peut être considéré comme un dispositif de traitement cryptographique.

Ce dispositif de traitement cryptographique se décline en différents modes de réalisation.

Dans un mode de réalisation représenté en figure 4, le dispositif de traitement cryptographique 1 comprend une mémoire 2 et au moins un processeur 4. La mémoire 2 stocke un programme d'ordinateur, le programme d'ordinateur comprenant des instructions de code. Le ou chaque processeur 4 est configuré pour exécuter les instructions de code. Cette exécution cause la mise en œuvre du procédé de traitement de cryptographique. Le ou chaque processeur est un composant générique, par exemple un CPU. Dans ce mode de réalisation, la fonction *MAJ^{m}* et la fonction *CH^{m}* constituent des portions du programme d'ordinateur.

Dans un autre mode de réalisation représenté en figure 5, le dispositif de traitement cryptographique 1 comprend un circuit de majorité 10 pour appliquer la fonction *MAJ^{m},* et un circuit de choix 20 pour appliquer la fonction *CH^{m}.* Le circuit de majorité 10 peut comprendre des portes logiques reliées conformément aux blocs représentés sur la figure 1. De même, le circuit de choix 20 peut comprendre des portes logiques reliées conformément aux blocs représentés sur la figure 2.

## Revendications

1. Procédé de traitement cryptographique mis en œuvre par ordinateur, comprenant l'application d'une fonction (*MAJ^{m}, CH^{m}*) dans un domaine masqué à une première donnée d'entrée (*A^{m}*), une deuxième donnée d'entrée (*B^{m}*) et une troisième donnée d'entrée (*C^{m}*), l'application de la fonction dans le domaine masqué comprenant :
• calculer (100, 200) une première donnée intermédiaire (*A^{m}* ⊕*^{m}* C*^{m}*, *A^{m}* ⊕*^{m} R^{m}*) par application d'un premier opérateur ⊕*^{m}* entre la première donnée d'entrée (*A^{m}*) et un premier opérande (*C^{m}*, *R^{m}*), le premier opérateur ⊕*^{m}* vérifiant l'égalité suivante pour toute paire de valeurs *X, Y :* $X ⊕ Y = = unmask \left(mask\left(X\right){⊕}^{m}mask\left(Y\right)\right)$
• où ⊕ est une disjonction exclusive, *mask* est une fonction de masquage, et *unmask* est une fonction de démasquage,
• calculer (102, 202) une deuxième donnée intermédiaire (*B^{m}* ⊕*^{m} C^{m}*) par application du premier opérateur ⊕*^{m}* entre la deuxième donnée d'entrée (*B^{m}*) et la troisième donnée d'entrée (*C^{m}*),
• calculer (104, 204) une troisième donnée intermédiaire par application d'un deuxième opérateur Λ*^{m,sec}* entre la première donnée intermédiaire (*A^{m}* ⊕*^{m} C^{m}*, *A^{m}* ⊕*^{m} R^{m}*) et la deuxième donnée intermédiaire (*B^{m}* ⊕*^{m} C^{m}*), le deuxième opérateur *Λ^{m,sec}* comprenant des mesures de protection contre des attaques par canal auxiliaire, et vérifiant l'égalité suivante pour toute paire de valeurs *X, Y :* $X ∧ Y = = unmask \left(mask\left(X\right){∧}^{m , sec}mask\left(Y\right)\right)$
• où Λ est une conjonction logique,
• calculer (106, 206) une donnée de sortie de la fonction dans le domaine masqué par application du premier opérateur ⊕*^{m}* entre au moins un deuxième opérande (*C^{m}*, *R^{m}* Λ*^{m}* (*B^{m}* ⊕*^{m} C^{m}*)) et la troisième donnée intermédiaire.

2. Procédé selon la revendication précédente, dans lequel la fonction de masquage *mask* est configurée pour masquer une valeur X quelconque en une représentation *X^{m}* dans le domaine masqué constituée de n+1 portions avec n≥1, dans lequel :
• lorsque n=1, les portions sont respectivement égales à M et *X* ⊕ *M,* où M est un masque,
• lorsque n>1, l'une des portions est égale à *X* ⊕ *M*₁ ⊕ ... ⊕ *Mₙ,* et les n autres portions sont respectivement égales à *M*₁, ..., *Mₙ,* où pour tout i allant de 1 à n, *Mᵢ* est un masque.

3. Procédé selon l'une quelconque des revendications précédentes, dans lequel la fonction dans le domaine masqué est une fonction *MAJ^{m}* vérifiant l'égalité suivante pour tout triplet de valeurs *A, B, C :* $MAJ \left(A, B, C\right) = = unmask \left({MAJ}^{m}\left(mask\left(A\right),mask\left(B\right),mask\left(C\right)\right)\right)$
• où *MAJ* est une fonction de majorité.

4. Procédé selon la revendication précédente, dans lequel :
• le premier opérande est la troisième donnée d'entrée (*C^{m}*), et
• le deuxième opérande est la troisième donnée d'entrée (*C^{m}*).

5. Procédé selon l'une quelconque des revendications 1 et 2, dans lequel la fonction dans le domaine masqué est une fonction *CH^{m}* vérifiant l'égalité suivante pour tout triplet de valeurs *A, B, C :* $CH \left(A, B, C\right) = = unmask \left({CH}^{m}\left(mask\left(A\right),mask\left(B\right),mask\left(C\right)\right)\right)$
• où *CH* est une fonction de choix.

6. Procédé selon la revendication précédente dans lequel :
• le premier opérande est un aléa (*R^{m}*),
• le deuxième opérande est une quatrième donnée intermédiaire (*R^{m}* Λ*^{m}* (*B^{m}* ⊕*^{m} C^{m}*)) calculée (203) par application d'un troisième opérateur Λ*^{m}* entre l'aléa (*R^{m}*) et la deuxième donnée intermédiaire (*B^{m}* ⊕*^{m} C^{m}*), le troisième opérateur Λ*^{m}* vérifiant l'égalité suivante pour toute paire de valeurs X, Y : $X ∧ Y = = unmask \left(mask\left(X\right){∧}^{m}mask\left(Y\right)\right) et$
• le premier opérateur est en outre appliqué à la troisième donnée d'entrée (*C^{m}*) pour le calcul (206) de la donnée de sortie de la fonction dans le domaine masqué.

7. Procédé selon la revendication précédente, dans lequel le troisième opérateur Λ*^{m}* est dépourvu de mesures de protection contre des attaques par canal auxiliaire.

8. Procédé selon la revendication précédente, dans lequel le troisième opérateur Λ*^{m}* est configuré pour produire un résultat à n+1 portions [*Z*₁, ..., *Z*_{*n*+1}] à partir de deux opérandes [*X*₁, ...,*X*_{*n*+1}] et [*Y*₁, *..., Y*_{*n*+1}] à n+1 portions, avec *n* ≥ 1, de sorte que, pour tout i allant de 1 à n+1 : ${Z}_{i} = \left({X}_{1}⊕…⊕{X}_{n + 1}\right) ∧ {Y}_{i}$

9. Procédé selon l'une quelconque des revendications précédentes, comprenant :
• masquer des données en clair en des données masquées à l'aide de la fonction de masquage *mask,*
• générer un résultat masqué à partir des données masquées, dans lequel :
• la première donnée d'entrée (*A^{m}*), la deuxième donnée d'entrée (*B^{m}*) et la troisième donnée d'entrée (*C^{m}*) sont issues des données masquées,
• le résultat masqué est issu de la donnée de sortie de la fonction dans le domaine masqué,
• démasquer le résultat masqué à l'aide de la fonction de démasquage *unmask.*

10. Procédé selon la revendication précédente, dans lequel le traitement cryptographique est une fonction de hachage.

11. Procédé selon la revendication 9, dans lequel :
• les données en clair comprennent un message et une clé,
• le résultat masqué est une représentation masquée d'un code d'authentification de message de hachage à clé (HMAC).

12. Produit programme d'ordinateur comprenant des instructions de code de programme pour l'exécution des étapes du procédé selon l'une des revendications précédentes, lorsque ce programme est exécuté par ordinateur.

13. Dispositif de traitement cryptographique (1) comprenant un circuit (10, 20) configuré pour appliquer une fonction (MAJ^{m}, CH^{m}) dans un domaine masqué à une première donnée d'entrée, une deuxième donnée d'entrée et une troisième donnée d'entrée, l'application de la fonction dans le domaine masqué comprenant :
• calculer (100, 200) une première donnée intermédiaire (*A^{m}* ⊕*^{m} C^{m}*, *A^{m}* ⊕*^{m} R^{m}*) par application d'un premier opérateur ⊕*^{m}* entre la première donnée d'entrée (*A^{m}*) et un premier opérande (*C^{m}*, *R^{m}*), le premier opérateur ⊕*^{m}* vérifiant l'égalité suivante pour toute paire de valeurs *X, Y :* $X ⊕ Y = = unmask \left(mask\left(X\right){⊕}^{m}mask\left(Y\right)\right)$
• où ⊕ est une disjonction exclusive, *mask* est une fonction de masquage, et *unmask* est une fonction de démasquage,
• calculer (102, 202) une deuxième donnée intermédiaire (*B^{m}* ⊕*^{m} C^{m}*) par application du premier opérateur ⊕*^{m}* entre la deuxième donnée d'entrée (*B^{m}*) et la troisième donnée d'entrée (*C^{m}*),
• calculer (104, 204) une troisième donnée intermédiaire par application d'un deuxième opérateur Λ*^{m,sec}* entre la première donnée intermédiaire (*A^{m}* ⊕*^{m} C^{m}*, *A^{m}* ⊕*^{m} R^{m}*) et la deuxième donnée intermédiaire (*B^{m}* ⊕*^{m} C^{m}*), le deuxième opérateur Λ*^{m,sec}* comprenant des mesures de protection contre des attaques par canal auxiliaire, et vérifiant l'égalité suivante pour toute paire de valeurs *X, Y :* $X ∧ Y = = unmask \left(mask\left(X\right){∧}^{m , sec}mask\left(Y\right)\right)$
• où Λ est une conjonction logique,
• calculer (106, 206) une donnée de sortie de la fonction dans le domaine masqué par application du premier opérateur ⊕*^{m}* entre au moins un deuxième opérande (*C^{m}*, *R^{m}* Λ*^{m}* (*B^{m}* ⊕*^{m} C^{m}*)) et la troisième donnée intermédiaire.
